# FASCICULE DE BREVET EUROPEEN

(11) **EP 4 272 961 B1**
(45) Date de publication et mention de la délivrance du brevet: **02.07.2025**
(21) Numéro de dépôt: 23171102.9
(22) Date de dépôt: 02.05.2023
(51) Int. Cl.: B33Y 70/10, C22C 1/05, C22C 32/00, C22C 1/047, C22C 1/04, B22F 10/28, B33Y 10/00

(54) **PROCÉDÉ DE FABRICATION D'UNE PIÈCE EN ALLIAGE D'ALUMINIUM PAR FABRICATION ADDITIVE**
VERFAHREN ZUR HERSTELLUNG EINES ALUMINIUMLEGIERUNGSTEILS DURCH GENERATIVE FERTIGUNG
METHOD FOR MANUFACTURING AN ALUMINUM ALLOY PART BY ADDITIVE MANUFACTURING

(30) Priorité: 03.05.2022 FR 2204181
(43) Date de publication de la demande: 08.11.2023
(73) Titulaire: Commissariat à l'Energie Atomique et aux Energies Alternatives, 75015 Paris (FR)
(72) Inventeur: MANLAY, Marie-Reine, GRENOBLE (FR); FLAMENT, Camille, GRENOBLE (FR); GARANDET, Jean-Paul, GRENOBLE (FR); SOULIER, Mathieu, GRENOBLE (FR)
(74) Mandataire: Brevalex

(56) Documents cités:
- WO-A1-2019/191056
- CN-A- 112 974 821
- US-B2- 11 286 543
- KHAN ADNAN ET AL: "Structural and Mechanical Properties of Al-SiC-ZrO2 Nanocomposites Fabricated by Microwave Sintering Technique", CRYSTALS, vol. 10, no. 10, 1 October 2020 (2020-10-01), CH, pages 904, XP093059353, ISSN: 2073-4352, DOI: 10.3390/cryst10100904
- DATABASE INSPEC [online] THE INSTITUTION OF ELECTRICAL ENGINEERS, STEVENAGE, GB; 18 December 2019 (2019-12-18), JIAN LONG ET AL: "Effects of minor Zr addition on the microstructure and mechanical properties of laser welded joint of Al/SiCp metal-matrix composite", XP002808524, Database accession no. 19927478

## Description

### DOMAINE TECHNIQUE

La présente invention se rapporte au domaine général de la fabrication de pièce en aluminium ou en un de ses alliages par fabrication additive.

L'invention concerne un procédé de fabrication d'une pièce en alliage d'aluminium et une pièce ainsi obtenue.

L'invention est particulièrement intéressante puisqu'elle permet d'améliorer la résistance mécanique d'une pièce en aluminium ou en alliage d'aluminium.

L'invention trouve des applications dans de nombreux domaines industriels, et notamment dans les domaines de l'industrie automobile ou de l'aérospatial.

### ÉTAT DE LA TECHNIQUE ANTÉRIEURE

Pour augmenter les propriétés mécaniques de l'aluminium, il est connu d'élaborer des composites Al/SiC (aluminium renforcé par du carbure de silicium). Ces matériaux sont, par exemple, utilisés dans l'industrie automobile, l'aérospatial et la défense. De tels matériaux sont assez simples à obtenir par des techniques de fonderie.

Cependant, du fait de l'instabilité du SiC dans l'aluminium liquide, il est plus difficile de fabriquer des composites Al/SiC avec d'autres technologies impliquant une température de procédé plus élevée, et notamment par fabrication additive.

Dans les procédés de fabrication additive, et en particulier dans les procédés de Fusion Laser sur Lit de Poudre (FLLP) ou dans les procédés de fusion par faisceau d'électrons (EBM pour Electron Beam Melting), la matière première est sous forme de poudres. La mise en forme du composite se fait par fusion sélective d'un lit de poudre, suivie d'un refroidissement pour solidifier la poudre fondue. Les vitesses de refroidissement de la matière en fusion sont très rapides (au moins 10⁵ K/s, voire jusqu'à plus de 10⁶ K/s). Avec de tels procédés, il est possible de réaliser des pièces de forme simple ou complexe.

Cependant, les températures mises en œuvre dans ces procédés sont bien plus élevées qu'en fonderie, ce qui favorise la réaction entre la matrice aluminium et les renforts de carbure de silicium. A partir de 750°C, on observe une dégradation du SiC en carbure d'aluminium Al₄C₃ selon le mécanisme réactionnel suivant :

4Al + 3SiC → Al₄C₃ + 3Si

Or, ce carbure d'aluminium est fragile et hydrosoluble (dans l'eau et les atmosphères humides), ce qui diminue les propriétés mécaniques et la durée de vie des pièces ainsi fabriquées.

Le SiC n'est donc pas un bon candidat en tant que renfort dans des alliages d'aluminium obtenus par fabrication additive.

D'autres carbures sont stables dans l'aluminium fondu, par exemple le ZrC ou le TiC. Par exemple, J. Long et al. (« Effects of minor Zr addition on the microstructure and mechanical properties of laser welded joint of Al/SiCp metal-matrix composite », Journal of Manufacturing Processes (2020), 49, 373-384) ont montré que l'apport d'une feuille de métal Zr dans un joint de soudage laser entre deux plaques composites Al/SiC 10 pds% permettait la formation de phases de ZrC de 5 µm à 10 µm, plutôt que d'Al₄C₃, selon le mécanisme réactionnel suivant :

SiC + Zr → ZrC + Si

De tels carbures sont donc intéressants pour renforcer les alliages d'aluminium car l'ajout de zirconium permet non seulement de diminuer la porosité dans le joint, mais aussi d'augmenter ses propriétés mécaniques.

Cependant, dans ce type de procédé de soudage, la durée de vie du bain d'aluminium est plus importante que dans les procédés de fabrication additive de type FLLP et EBM, qui impliquent des vitesses de refroidissement très rapides, laissant peu de temps aux mécanismes réactionnels de se produire. A titre de comparaison, la durée de vie du bain de fusion est de l'ordre de 10 ms - 100 ms en soudage, tandis qu'en fabrication additive, elle est de l'ordre de 100 µs - 1 ms.

A notre connaissance, les composites en aluminium ou à matrice d'alliage d'aluminium et renfort ZrC ne sont pas mis en forme par fabrication additive.

Le document WO 2019/191056 A1 divulgue un procédé de fabrication d'une pièce en aluminium par fabrication additive à partir d'un mélange de poudres, qui comprend des particules en aluminium et des particules en carbure de silicium et/ou du zirconium.

Le document KHAN ADNAN ET AL: "Structural and Mechanical Properties of Al-SiC-ZrO2 Nanocomposites Fabricated by Microwave Sintering Technique",CRYSTALS, vol. 10, no. 10, 1 octobre 2020 (2020-10-01), page 904, divulgue une pièce en aluminium comprenant des précipités d'aluminure de zirconium.

### EXPOSÉ DE L'INVENTION

Un but de la présente invention est de proposer un procédé permettant de former des pièces ayant de bonnes propriétés mécaniques et une bonne durée de vie.

Pour cela, la présente invention propose un procédé de fabrication d'une pièce en aluminium ou en alliage d'aluminium par fabrication additive comprenant une étape au cours de laquelle une couche d'un mélange de poudres est localement fondue puis solidifiée, caractérisé en ce que le mélange de poudres comprend :
- des premières particules en aluminium ou en alliage d'aluminium, et
- des deuxièmes particules en carbure de silicium, et
- des troisièmes particules comprenant du zirconium, le zirconium étant sous forme élémentair, sous forme d'oxyde ou sous forme de siliciure, moyennant quoi on forme une pièce en aluminium ou en alliage d'aluminium avec des renforts en ZrC, les deuxièmes particules représentant entre 0,5 et 20 pds% du mélange de poudres, le rapport molaire Zr/ C étant compris entre 1 et 10 et le procédé de fabrication additive étant un procédé de fusion par faisceau d'électrons ou un procédé de fusion laser sur lit de poudre.

L'invention se distingue fondamentalement de l'art antérieur par l'ajout à la fois de SiC et de zirconium. Le zirconium, ayant plus d'affinité avec le carbone que le carbone avec l'aluminium, est un élément apte à former *in situ* un carbure ZrC, plus stable que Al₄C₃. Le carbure de zirconium est un renfort stable dans l'aluminium fondu même aux très hautes températures induites par le procédé de fabrication.

On observe ainsi une forte diminution de la quantité d'Al₄C₃ voire la disparition de ce composé dans les pièces en aluminium ou en alliage d'aluminium fabriquées avec ce procédé.

Pour des raisons relevant à la fois de la thermodynamique et de la cinétique, il n'était pas évident de trouver une molécule capable de libérer l'élément métallique, qui formerait un carbure plus stable que Al₄C₃ dans l'aluminium évitant ainsi la formation d'Al₄C₃.

Le fait de former *in-situ* un renfort ZrC plutôt qu'élaborer un composite à partir d'un précurseur ZrC a plusieurs avantages, notamment une meilleure qualité d'interface ainsi qu'une meilleure mouillabilité.

Le zirconium est sous forme élémentaire, sous forme d'oxyde ou sous forme de siliciure.

Selon une première variante de réalisation, les troisièmes particules sont en oxyde de zirconium ZrO₂ pour des raisons de facilité de manipulation. On obtient ainsi une poudre composite de type Al-SiC-ZrO₂.

Selon une deuxième variante de réalisation, les troisièmes particules sont en zircone yttriée YSZ, en zirconium métallique Zr ou en siliciure de zirconium ZrSi₂.

Sans être lié par la théorie, le mécanisme donnant naissance à un renfort de carbure de zirconium à partir d'aluminium, de SiC et de ZrO₂ peut comprendre les étapes et réactions suivantes :
- Décomposition du SiC :

   4AI + 3SiC → Al₄C₃ + 3Si (1)
- Réduction ou dissolution de la zircone :

   ZrO₂ → Zr + O₂ (2)

   4AI + 3ZrO₂ → 2Al₂O₃ + 3Zr (3)

   3ZrO₂ + 13 Al → 3Al₃Zr + 2Al₂O₃ (4)

   3AI + Zr → Al₃Zr (5)
- Combinaison des produits de réaction pour former un renfort ZrC :

   3Zr +Al₄C₃ → 3ZrC + 4AI (6)

   3Al₃Zr + Al₄C₃ → 3ZrC + 13 Al (7)

Vu la complexité du schéma réactionnel, il n'était pas évident de penser que la cinétique des réactions serait suffisamment rapide pour qu'elles se produisent dans le court intervalle de temps de la durée de vie des bains de fusion en fabrication additive (typiquement de la centaine de microsecondes à quelques millisecondes au grand maximum), tandis qu'elle est de l'ordre de quelques dizaines de minutes, voire plusieurs heures en fonderie.

Les deuxièmes particules et les troisièmes particules représentent entre 0,5 et 20 pds% du mélange de poudres, préférentiellement entre 1 et 5 pds% du mélange de poudres.

Avantageusement, le nombre de moles de zirconium est supérieur ou égal au nombre de moles de carbone, ce qui permet de former du carbure de zirconium ZrC tout en réduisant fortement la formation d'Al₄C₃.

Avantageusement, un excès de zirconium par rapport à la quantité de carbone conduit également à la formation d'Al₃Zr et éventuellement d'autres aluminures de Zr, tels que par exemple Al₂SiZr. Ces composés peuvent être d'excellents agents raffinants pour l'aluminium et favorisent la germination. On forme ainsi une pièce en alliage d'aluminium ou en aluminium ayant une structure de grains équiaxe et une faible taille de grains. Les propriétés mécaniques des pièces élaborées peuvent ainsi être améliorées.

Le rapport molaire Zr/C est compris entre 1 et 10, préférentiellement entre 1,5 et 5, encore plus préférentiellement entre 2 et 4, notamment 3 ou une valeur sensiblement égale à 3. On évite ainsi la présence de carbure d'aluminium dans le composite final par la formation de renforts ZrC tout en formant des composés comprenant de l'aluminium et du zirconium favorisant la germination.

Avantageusement, le mélange de poudres est obtenu par broyage ou par mélange électrostatique.

Avantageusement, les deuxièmes particules et les troisièmes particules ont une plus grande dimension comprise entre 5 et 300 nm, préférentiellement entre 20 et 90 nm (par exemple de 35 nm à 60 nm) et/ou les premières particules ont une plus grande dimension comprise entre 10 µm et 120 µm, de préférence entre 10 µm et 60 µm.

Avantageusement, les premières particules sont en AlSi₁₂, AlSi₇Mg, AlSi₁₀Mg, Al6061 ou Al7075.

Le procédé de fabrication additive est un procédé de fusion par faisceau d'électrons (ou EBM pour 'Electron Beam Melting') ou un procédé par fusion laser (FLLP également connu sous les dénominations anglaises de LPBF, 'Laser Powder Bed Fusion' et par abus de langage SLM 'Selective Laser Melting').

Pour ce qui concerne l'élaboration des poudres composites, le procédé présente de nombreux avantages :
- être simple à mettre en œuvre, puisqu'il suffit de mélanger des poudres. Il s'agit d'une étape par voie sèche, rapide à réaliser et simple à mettre en place,
- être peu coûteux, et donc intéressant d'un point de vue industriel, par exemple, acheter du ZrC est plus cher qu'acheter du SiC et du ZrO₂,
- pouvoir facilement modifier le rapport entre les poudres au moment du mélange de poudre,
- quand le zirconium est ajouté sous forme d'oxyde, pouvoir stocker/manipuler facilement la poudre : il n'y a pas besoin d'utiliser d'atmosphère inerte,
- être facilement adaptable pour tout alliage d'aluminium,

Pour ce qui concerne l'étape de consolidation des poudres en machine, un des principaux avantages est de pouvoir utiliser les paramètres classiquement utilisés (ou du moins voisins de ceux classiquement utilisés) pour la fabrication des alliages d'aluminium correspondant aux premières particules.

L'invention concerne également une pièce en aluminium ou en alliage d'aluminium obtenue par le procédé précédemment décrit, comprenant des précipités de ZrC, ayant une plus grande dimension comprise entre 10 nm et 1 µm, de préférence entre 20 nm et 100 nm.

La pièce ainsi obtenue présente une forte diminution de la quantité de composés Al₄C₃ (voire une disparition de ces composés) par rapport à un composite Al-SiC obtenu sans ajout de zirconium.

Avantageusement, la pièce comprend en outre des précipités d'aluminures de zirconium tels que Al₃Zr et/ou Al₂SiZr.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
Les figures 1 et 2 sont des clichés obtenus au microscope électronique à balayage d'une poudre composite AlSi7Mg0.6/SiC 0.49 pds%/ZrO₂ 4.51 pds%, selon un mode de réalisation particulier de l'invention.
La figure 3 est un cliché obtenu au microscope électronique à transmission du composite AlSi7Mg0.6/SiC 0.49 pds%/ZrO₂ 4.51 pds% imprimé, montrant des précipités de ZrC, selon un mode de réalisation particulier de l'invention.
Les figures 4 et 5 sont des cartographies des éléments Zr et C, respectivement, obtenus par spectroscopie de rayons X à dispersion d'énergie (TEM-EDX) du composite AlSi7Mg0.6/SiC 0.49 pds%/ZrO₂ 4.51 pds% imprimé de la figure 3.
La figure 6 est un cliché de diffraction au TEM du précipité de ZrC, d'un précipité de ZrC de la figure 3, selon un mode de réalisation particulier de l'invention.
La figure 7 représente les diffractogrammes de différents composites obtenus à partir d'un alliage de AlSi7Mg0.6, de SiC et de ZrO₂, avec des rapports Zr/C de 3 et de 1, selon différents modes de réalisation de l'invention, ainsi qu'à titre comparatif le diffractogramme d'une poudre d'alliage de AlSi7Mg0.6 ; les angles des pics correspondants à Al₄C₃ et ZrC sont indiqués par des traits verticaux.
La figure 8 est un cliché obtenu au microscope électronique à transmission du composite AlSi7Mg0.6/SiC 3 pds% imprimé (FLLP) montrant des plaquettes d'Al₄C₃.
Les figures 9 et 10 sont des clichés obtenus par spectroscopie de rayons X à dispersion d'énergie (TEM-EDX) du composite AlSi7Mg0.6/SiC 3 pds% imprimé par FLLP de la figure 8, montrant, respectivement, le carbone et l'aluminium des plaquettes d'Al₄C₃.

### EXPOSÉ DÉTAILLÉ DE MODES DE RÉALISATION PARTICULIERS

Bien que cela ne soit aucunement limitatif, l'invention trouve particulièrement des applications dans le domaine de l'aérospatial, de la défense et de l'automobile (disques de freins, chemises de cylindre, blocs moteurs, arbre d'entraînement, rotor de pales d'hélicoptère, etc).

L'invention est applicable à tous les alliages base aluminium, tant ceux dits de fonderie (par exemple AlSi12, AlSi7Mg, AlSi10Mg) que ceux dits de corroyage (par exemple Al6061, Al7075). Pour ces derniers, souvent sensibles au phénomène de fissuration à chaud, un avantage additionnel de l'invention est que la présence de nanoparticules germinantes de type Al₃Zr permet de résoudre le problème en induisant une structure de solidification équiaxe.

Le procédé de fabrication d'une pièce en aluminium ou en alliage d'aluminium par fabrication additive comprend une étape au cours de laquelle une couche d'un mélange de poudres est localement fondue puis solidifiée, le mélange de poudres comprenant :
- des premières particules en aluminium ou en alliage d'aluminium, et
- des deuxièmes particules en carbure de silicium, et
- des troisièmes particules comprenant du zirconium.

Les premières particules sont en alliage d'aluminium ou en aluminium.

Les particules d'alliage base Al comprennent au moins 80% massique d'aluminium, et de préférence au moins 90% massique d'aluminium.

Elles peuvent comprendre jusqu'à 20% et de préférence jusqu'à 10% massique d'un ou plusieurs éléments additionnels (aussi appelés éléments d'alliage). Ces éléments sont, de préférence, choisis parmi le zinc, le magnésium, le cuivre, le silicium, le fer et le manganèse.

De préférence, les premières particules et/ou les deuxièmes particules et/ou les troisièmes particules sont sensiblement sphériques et leur plus grande dimension est leur diamètre.

Selon un mode de réalisation avantageux, les premières particules ont une plus grande dimension comprise entre 10 µm et 120 µm, de préférence entre 10 µm et 60 µm.

Les deuxièmes particules sont en SiC.

Les troisièmes particules contiennent du Zr.

Selon une autre variante de réalisation, il peut s'agir de particules en zirconium.

Selon une autre variante de réalisation, les particules contenant du Zr sont des particules de zircone yttriée (ou YSZ pour « Yttria-Stabilized Zirconia »), de ZrO₂ ou de ZrSi₂. Il peut également s'agir d'un de leurs mélanges. Par exemple, il peut s'agir d'un mélange de YSZ et de ZrO₂, ou encore un mélange de YSZ, de ZrO₂ et de ZrSi₂.

Les deuxièmes particules et/ou les troisièmes particules ont une plus grande dimension allant de 5 nm à 300 nm et, de préférence, de 10 nm à 100 nm, encore plus préférentiellement de 20 nm à 90 nm. Par exemple, on choisira des deuxièmes particules et/ou des troisièmes particules ayant une plus grande dimension entre 30 nm et 80 nm. Le diamètre des deuxièmes particules est choisi indépendamment du diamètre des troisièmes particules.

Les deuxièmes particules et les troisièmes particules représentent entre 0,5 et 20 pds% du mélange de poudres, préférentiellement entre 1 et 5 pds% du mélange de poudres. Autrement dit, la somme du poids des deuxièmes particules et du poids des troisièmes particules représente entre 0,5 et 20 % en poids du mélange de poudres, préférentiellement entre 1 et 5 % en poids du mélange de poudres.

Selon une première variante de réalisation, la poudre composite peut être obtenue par mélange électrostatique.

Le mélange électrostatique consiste à lier par effet triboélectrique des poudres submicroniques à la surface de poudres microniques. Les affinités électroniques du SiC et du ZrO₂ étant différentes de celle de l'aluminium, une accroche des nanoparticules de SiC et ZrO₂ à la surface des particules d'alliage d'aluminium est ainsi réalisée. Ce type de mélange est effectué en utilisant un mélangeur tridimensionnel couplé à des billes, par exemple en zircone, pour promouvoir les forces de cisaillement, ou un mélangeur à pales, plus énergétique. Avantageusement, un mélangeur à pales à fort cisaillement proposant une vitesse tangentielle entre 10 et 30 m/s sera utilisé pour réaliser les assemblages électrostatiques. Cette technologie de mélangeur permet une plus forte accumulation de charges électrostatiques tout en limitant les risques de déformation plastique des poudres d'aluminium au cours du mélange.

Selon une deuxième variante de réalisation, la poudre composite peut être obtenue par broyage haute énergie. Le broyage haute énergie consiste à homogénéiser un mélange de poudres à l'échelle sub-micronique sous l'effet de chocs et cisaillements exécutés par des billes. Ces sollicitations mécaniques permettent des étapes successives de fracturation et collage amenant à un mélange homogène d'agglomérats de poudres. Des réactions chimiques à l'état solide peuvent avoir lieu. Ce type de mélange est effectué en utilisant un attriteur ou broyeur à billes/boulets.

A partir de ce mélange de poudres, on fabrique la pièce en aluminium ou en alliage d'aluminium par fabrication additive.

Lors du procédé de fabrication additive, on utilise un faisceau (un faisceau laser ou un faisceau d'électrons) suffisamment énergétique pour faire fondre les particules de poudre.

Avec de tels procédés, il est possible de produire industriellement des pièces, de forme simple ou complexe, ayant des propriétés mécaniques satisfaisantes.

Les machines utilisées pour les procédés de fabrication additive de type FLLP ou EBM comprennent, par exemple, un système d'alimentation en poudre (« Powder delivery system »), un dispositif d'étalement et d'homogénéisation de la surface de la poudre, rouleau ou racle (« Roller » ou « Blade »), un faisceau (par exemple un faisceau laser infrarouge à une longueur d'onde entre 1000 et 1100nm), un scanner pour diriger le faisceau, et un substrat (aussi appelé plateau) qui peut descendre verticalement (selon un axe Z perpendiculaire au lit de poudre).

L'ensemble peut être confiné dans une enceinte thermiquement fermée et inerte, pour contrôler l'atmosphère, mais aussi pour éviter la dissémination des poudres.

Les poudres non solidifiées sont ensuite évacuées et la pièce finale est détachée du substrat.

Selon une première variante de réalisation, il s'agit d'un procédé de Fusion Laser sur Lit de Poudre (FLLP, également connu sous les dénominations anglaises de LPBF, Laser Powder Bed Fusion et par abus de langage SLM Selective Laser Melting). A titre illustratif et non limitatif, les paramètres du procédé de fabrication par fusion laser sur lit de poudre sont :
- entre 50 et 600W pour la puissance laser ;
- entre 100 et 2000 mm/s pour la vitesse laser ;
- entre 25 et 250µm pour la distance entre deux espaces vecteurs (« hatch » en terminologie anglo-saxone) ;
- entre 15 et 80µm pour l'épaisseur de couche.

Selon une autre variante de réalisation, il s'agit d'un procédé de fusion par faisceau d'électrons sur lit de poudre (EBM). A titre illustratif et non limitatif, les paramètres du procédé de fabrication par fusion par faisceau d'électrons sur lit de poudre sont :
- entre 50 et 3000W pour le faisceau d'électrons ;
- entre 100 et 8000 mm/s pour la vitesse du faisceau ;
- entre 50 et 200µm pour la distance entre deux espaces vecteurs ;
- entre 30 et 150µm pour l'épaisseur de couche.

La pièce obtenue présente des précipités de ZrC, ayant une plus grande dimension comprise entre 10 nm et 1 µm, de préférence entre 20 nm et 100 nm. La pièce peut, en outre, comprendre des précipités d'aluminures de zirconium tels que Al₃Zr et/ou Al₂SiZr.

Les précipités de Al₃Zr ont, avantageusement, un paramètre de maille proche de celui de l'aluminium, ce qui favorise sa germination.

La pièce obtenue, selon l'un de ces procédés, peut être soumise à une ou plusieurs étape(s) de recuit (traitement thermique) pour réduire les contraintes internes et améliorer les propriétés mécaniques.

### Exemple illustratif et non limitatif d'un mode de réalisation :

Nous allons maintenant décrire plus en détail un exemple particulier de réalisation de l'invention.

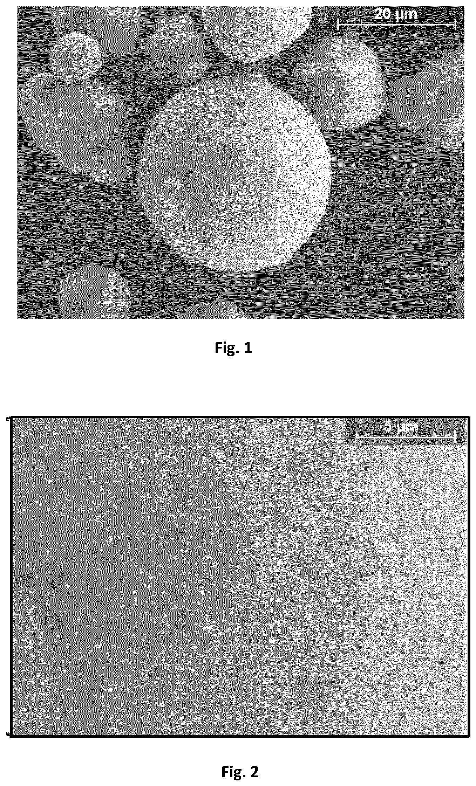

La mise en œuvre de l'invention se fait en deux étapes. Dans un premier temps, une poudre composite est élaborée par mélange de SiC (35 nm), ZrO₂ (80 nm) et d'une poudre d'alliage d'aluminium AlSi₇Mg_{0.6} (15-53 µm). Ce mélange est préférentiellement élaboré par accroche électrostatique des nanoparticules à la surface des particules d'alliage d'aluminium. L'accroche électrostatique est, de préférence, réalisée avec un mélangeur à pales à fort cisaillement. On choisira, par exemple, une vitesse tangentielle des pales comprise entre 10 et 30 m/s. Par exemple, pour 5 pds% de renforts, 4.51 pds% de ZrO₂ et 0.49 pds% de SiC sont greffés à la surface des particules d'alliage pour satisfaire en équivalent molaire un ratio Zr/C de 3 (Figures 1 et 2).

Ensuite, la poudre composite est imprimée en 25 cubes de dimensions 10x10x10 mm sur une machine de fusion laser sur lit de poudre. A titre indicatif, on peut utiliser les paramètres suivants :
- Puissance laser : 100-600 W, préférentiellement 200-400W,
- Vitesse de scan : 500-2000 mm/s, préférentiellement 800-1600 mm/s,
- Distance entre cordons : 0,08 à 0,25 mm, préférentiellement 0,15 à 0,2 mm,
- Epaisseur du lit de poudre : 20 à 80 µm, préférentiellement 40 à 60 µm.

A titre illustratif et non limitatif, pour obtenir une bonne densification des pièces sur une machine SLM 125 HL avec une longueur d'onde laser de 1064 nm et un diamètre de spot de 70 µm, on pourra choisir les paramètres suivants : vitesse de scan 1000 mm/s, puissance laser 275 W, distance entre cordons 0,17 mm et épaisseur de couche 50 µm.

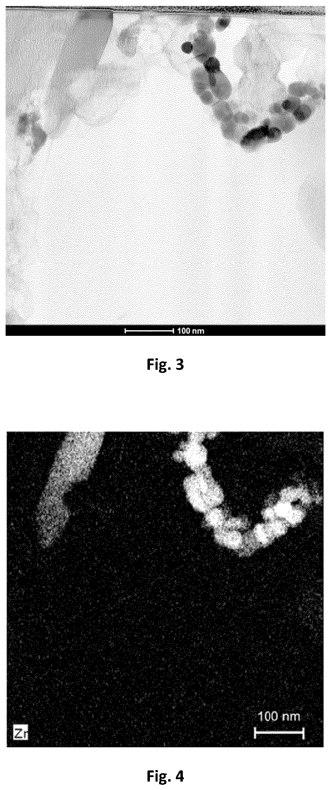

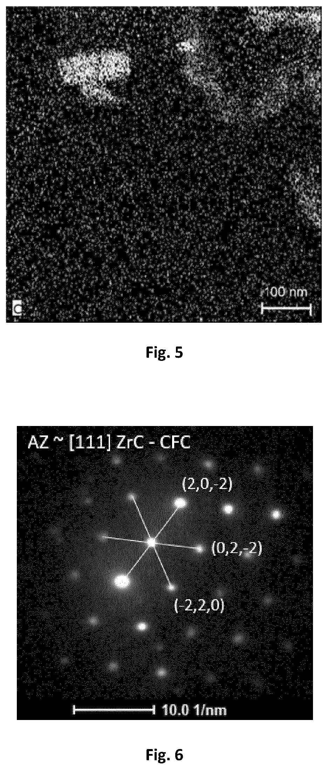

Des caractérisations au TEM ont ensuite été réalisées. Les inventeurs ont montré la précipitation de ZrC sous forme de précipités de taille 10 nm - 1 µm aux joints de grains et de cellule (Figures 3, 4, 5 et 6). L'échelle sur les figures 3, 4 et 5 est de 100 nm.

Il n'était pas évident que ce renfort ZrC aurait le temps de se former au vu de la complexité du schéma réactionnel et des fortes vitesses de refroidissement du procédé de fabrication (10⁶ K/s).

La présence de ZrC et l'absence d'Al₄C₃ sont également détectables par Diffraction des Rayons X (DRX).

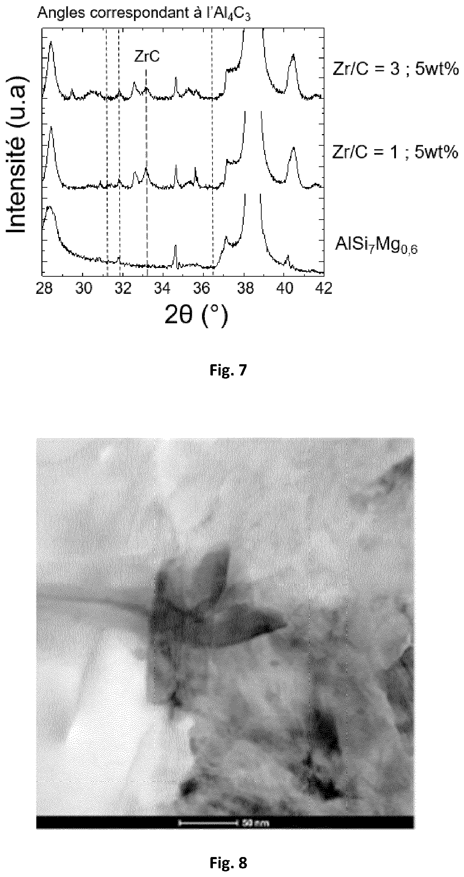

Dans un autre exemple, la DRX permet de montrer que le renfort ZrC a été formé dans un composite contenant 5pds% de renforts avec une quantité de SiC et ZrO₂ satisfaisant un ratio molaire Zr/C de 1 et de 3, par greffage de 3,77 pds% de ZrO₂ et 1,23 pds% de SiC à la surface des particules d'alliage d'aluminium (Figure 7). Aucun pic d'Al₄C₃ n'est détecté dans ces composites.

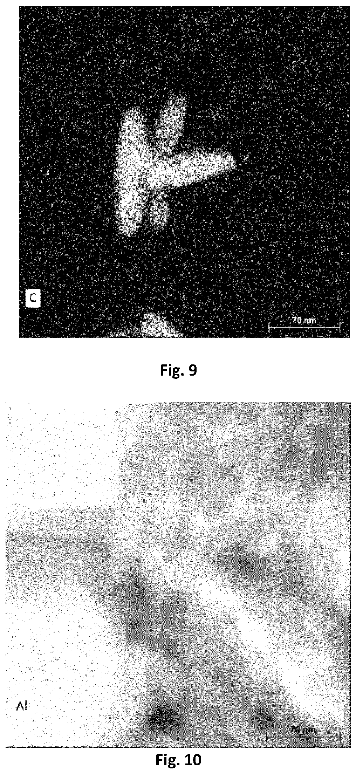

A titre de comparaison, les figures 8, 9 et 10 sont des cartographies TEM-EDX du composite AlSi₇Mg_{0.6}/SiC 3 pds% imprimé par FLLP à partir d'un mélange de poudres de AlSi₇Mg_{0.6} et de SiC. De nombreuses plaquettes d'Al₄C₃ sont observées. L'échelle sur la figure 8 est de 50nm, sur les figures 9 et 10 de 70 nm.

## Revendications

1. Procédé de fabrication d'une pièce en aluminium ou en alliage d'aluminium par fabrication additive comprenant une étape au cours de laquelle une couche d'un mélange de poudres est localement fondue puis solidifiée, **caractérisé en ce que** le mélange de poudres comprend :
- des premières particules en aluminium ou en alliage d'aluminium, et
- des deuxièmes particules en carbure de silicium, et
- des troisièmes particules comprenant du zirconium, le zirconium étant sous forme élémentaire, sous forme d'oxyde ou sous forme de siliciure,
les deuxièmes particules et les troisièmes particules représentant entre 0,5 et 20 pds% du mélange de poudres, le rapport molaire Zr/C étant compris entre 1 et 10 et le procédé de fabrication additive étant un procédé de fusion par faisceau d'électrons ou un procédé de fusion laser sur lit de poudre.

2. Procédé selon la revendication 1, **caractérisé en ce que** les troisièmes particules sont en oxyde de zirconium ZrO₂.

3. Procédé selon la revendication 1, **caractérisé en ce que** les troisièmes particules sont en YSZ, ZrSi₂ ou en Zr métallique.

4. Procédé selon la revendication 3, **caractérisé en ce que** les deuxièmes particules et les troisièmes particules représentent entre 1 et 5 pds% du mélange de poudres.

5. Procédé selon l'une quelconque des revendications précédentes, **caractérisé en ce que** le rapport molaire Zr/C est compris entre 1,5 et 5, préférentiellement entre 2 et 4, par exemple 3.

6. Procédé selon l'une quelconque des revendications précédentes, **caractérisé en ce que** le mélange de poudres est obtenu par broyage ou par mélange électrostatique.

7. Procédé selon l'une quelconque des revendications précédentes, **caractérisé en ce que** les deuxièmes particules et les troisièmes particules ont une plus grande dimension, mesurée au microscope électronique à balayage, comprise entre 5 et 300 nm, préférentiellement entre 20 et 90 nm et/ou les premières particules ont une plus grande dimension comprise entre 10 µm et 120 µm, de préférence entre 10 µm et 60 µm.

8. Procédé selon l'une quelconque des revendications précédentes, **caractérisé en ce que** les premières particules sont en AlSi12, AlSi7Mg, AlSi10Mg, Al6061, ou Al7075.

9. Pièce en aluminium ou en alliage d'aluminium obtenue par le procédé selon l'une quelconque des revendications 1 à 8, comprenant des précipités de ZrC, ayant une plus grande dimension comprise entre 10 nm et 1 µm, de préférence entre 20 nm et 100 nm.

10. Pièce en aluminium ou en alliage d'aluminium selon la revendication précédente, **caractérisé en ce que** la pièce comprend en outre des précipités d'aluminures de zirconium, par exemple Al₃Zr et/ou Al₂SiZr.

## Patentansprüche

1. Verfahren zur Herstellung eines Teils aus Aluminium oder aus einer Aluminiumlegierung durch additive Fertigung, umfassend einen Schritt, bei dem eine Schicht einer Pulvermischung lokal geschmolzen und dann verfestigt wird, **dadurch gekennzeichnet, dass** die Pulvermischung Folgendes umfasst:
- erste Partikel aus Aluminium oder aus einer Aluminiumlegierung, und
- zweite Siliziumkarbidpartikel, und
- dritte Partikel, die Zirkonium umfassen, wobei Zirkonium in elementarer Form, in Form von Oxid oder in Form von Silizium vorliegt,
die zweiten Partikel und die dritten Partikel, die zwischen 0,5 und 20 Gew.-% der Pulvermischung ausmachen, wobei das Molverhältnis Zr/C zwischen 1 und 10 liegt und das additive Fertigungsverfahren ein Elektronenstrahlschmelzverfahren oder ein Pulverbett-Laserschmelzverfahren ist.

2. Verfahren nach Anspruch 1, **dadurch gekennzeichnet, dass** die dritten Partikel aus Zirkonoxid ZrO₂ bestehen.

3. Verfahren nach Anspruch 1, **dadurch gekennzeichnet, dass** die dritten Partikel aus YSZ, ZrSi₂ oder metallischem Zr bestehen.

4. Verfahren nach Anspruch 3, **dadurch gekennzeichnet, dass** die zweiten Partikel und die dritten Partikel zwischen 1 und 5 Gew.-% der Pulvermischung ausmachen.

5. Verfahren nach einem der vorhergehenden Ansprüche, **dadurch gekennzeichnet, dass** das Molverhältnis Zr/C zwischen 1,5 und 5, vorzugsweise zwischen 2 und 4, beispielsweise 3, liegt.

6. Verfahren nach einem der vorhergehenden Ansprüche, **dadurch gekennzeichnet, dass** die Pulvermischung durch Mahlen oder elektrostatisches Mischen hergestellt wird.

7. Verfahren nach einem der vorhergehenden Ansprüche, **dadurch gekennzeichnet, dass** die zweiten Partikel und die dritten Partikel eine größte Abmessung, gemessen mit einem Scan-Elektronenmikroskop, zwischen 5 und 300 nm, vorzugsweise zwischen 20 und 90 nm, aufweisen und/oder die ersten Partikel eine größte Abmessung zwischen 10 µm und 120 µm, vorzugsweise zwischen 10 µm und 60 µm, aufweisen.

8. Verfahren nach einem der vorhergehenden Ansprüche, **dadurch gekennzeichnet, dass** die ersten Partikel aus AlSi12, AlSi7Mg, AlSi10Mg, Al6061 oder Al7075 bestehen.

9. Teil aus Aluminium oder aus einer Aluminiumlegierung, das durch das Verfahren nach einem der Ansprüche 1 bis 8 erhalten wurde und ZrC-Ausfällungen umfasst, die eine größte Abmessung zwischen 10 nm und 1 µm, vorzugsweise zwischen 20 nm und 100 nm aufweisen.

10. Teil aus Aluminium oder aus einer Aluminiumlegierung nach dem vorhergehenden Anspruch, **dadurch gekennzeichnet, dass** das Teil ferner Zirkonium-Aluminium-Ausfällungen, beispielsweise Al₃Zr und/oder Al₂SiZr, umfasst.

## Claims

1. Method for manufacturing an aluminium or aluminium alloy part by additive manufacturing comprising a step in which a layer of a powder mixture is locally melted and then solidified, **characterised in that** the powder mixture comprises:
- first aluminium or aluminium alloy particles, and
- second silicon carbide particles, and
- third particles comprising zirconium, the zirconium being in elemental form, in oxide form or in silicide form,
the second particles and the third particles representing between 0.5 and 20 wt% of the powder mixture, the molar ratio Zr/C being between 1 and 10 and the additive manufacturing method being an electron beam melting method or a powder bed laser fusion method.

2. Method according to claim 1, **characterised in that** the third particles are made of zirconium oxide ZrO₂.

3. Method according to claim 1, **characterised in that** the third particles are made of YSZ, ZrSi₂ or metallic Zr.

4. Method according to claim 3, **characterised in that** the second particles and the third particles represent between 1 and 5 wt% of the powder mixture.

5. Method according to any one of the preceding claims, **characterised in that** the molar ratio Zr/C is between 1.5 and 5, preferably between 2 and 4, for example 3.

6. Method according to any one of the preceding claims, **characterised in that** the powder mixture is obtained by grinding or by electrostatic mixing.

7. Method according to any one of the preceding claims, **characterised in that** the second particles and the third particles have a largest dimension, measured by a scanning electron microscope, of between 5 and 300 nm, preferably between 20 and 90 nm and/or the first particles have a largest dimension of between 10 µm and 120 µm, preferably between 10 µm and 60 µm.

8. Method according to any one of the preceding claims, **characterised in that** the first particles are made of AlSi12, AlSi7Mg, AlSi10Mg, Al6061, or Al7075.

9. Aluminium or aluminium alloy part obtained by the method according to any one of claims 1 to 8, comprising ZrC precipitates, having a largest dimension of between 10 nm and 1 µm, preferably between 20 nm and 100 nm.

10. Aluminium or aluminium alloy part according to the preceding claim, **characterised in that** the part further comprises precipitates of zirconium aluminides, for example Al₃Zr and/or Al₂SiZr.
